# EUROPEAN PATENT APPLICATION

(11) **EP 2 352 241 A1**
(43) Date of publication of application: **03.08.2011**
(21) Application number: 08878280.0
(22) Date of filing: 21.11.2008
(51) Int. Cl.: H04J 1/00, H04J 11/00

(54) **BASE STATION, COMMUNICATION METHOD, SUBCARRIER ALLOCATION METHOD, AND SUBCARRIER ALLOCATION PROGRAM**

(71) Applicant: Fujitsu Limited, Kawasaki-shi, Kanagawa 211-8588 (JP)
(72) Inventor: SUGA, Junichi, Kawasaki-shi Kanagawa 211-8588 (JP)
(74) Representative: Stebbing, Timothy Charles
(86) International application number: PCT/JP2008/071262
(87) International publication number: WO 2010/058483

(57) **Abstract**

The object is to provide a base station, a subcarrier assigning method, and a subcarrier assigning program that enable achieving enhancement in the frequency usage efficiency. In order to achieve the object, a base station is used that includes a transmitter or a receiver for performing wireless communication with a mobile station being under control of the base station; and a control unit for controlling the transmitter or the receiver, and performing wireless communication with the mobile station being under control of the base station by making use of such subchannels which not only have different combinations of subcarriers when compared to any subchannel in a first subchannel group that is used by an adjacently-installed adjacent base station for performing wireless communication with a mobile station under control thereof, but also include same subcarriers as subcarriers assigned to any one of subchannels in the first subchannel group.

## Description

### TECHNICAL FIELD

The present invention relates to a base station, a communication method, a frequency (subcarrier) assigning method, and a subcarrier assigning program.

### BACKGROUND ART

In recent years, in the IEEE (Institute of Electrical and Electronics Engineers) 802.16 WG (Working Group), the Point-to-Multipoint communication scheme is defined by which a plurality of mobile stations (hereinafter, referred to as "MS: Mobile Station") can get connected to a base station. Moreover, in the IEEE 802.16 WG are defined two types of applications, namely, the 802.16d specification (802.16-2004) defined mainly for fixed-line communication applications and the 802.16e (802.16e-2005) specification defined for mobile communication applications.

In the physical layer of a wireless communication system implementing the IEEE 802.16d/e specification, a technology such as the orthogonal frequency division multiplexing method (OFDM: Orthogonal Frequency Division Multiplex) or the orthogonal frequency division multiplexing access method (OFDMA: Orthogonal Frequency Division Multiplexing Access) is implemented.

In a wireless communication system implementing the OFDM or the OFDMA, a base station and an MS communicate with each other via a plurality of subchannels. As a method of assigning subcarriers to the subchannels, the PUSC (Partial Usage of Subchannels) method is known in which a plurality of subcarriers having dispersed frequencies is assigned to a single subchannel.

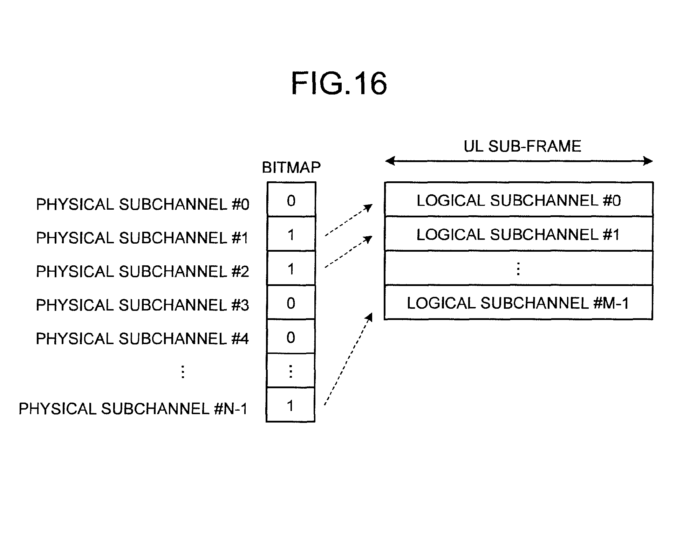

From among the subchannels having subcarriers assigned thereto, the base station selects subcarriers for the purpose of communicating with an MS. Herein, with reference to FIG. 16 is explained an example of a subchannel selecting method implemented by the base station. Meanwhile, it is herein assumed that the OFDMA is implemented in the physical layer of the wireless communication system. As illustrated in FIG. 16, the base station specifies, in the bitmap format, physical subchannels to be used during communication. Then, the base station performs wireless communication with the MS using the selected physical subchannels. In the following description, regarding each physical subchannel, the number specified after the "#" sign is sometimes referred to as "physical subchannel number".

In the example illustrated in FIG. 16, physical subchannels #0 to #N-1 are available for the base station to use. In this example, the base station sets "1" (indicating usage) in the bitmaps corresponding to the physical subchannels #1, #2, and the like while setting "0" (indicating non-usage) in the bitmaps corresponding to the physical subchannels #0, #3, #4, and the like. Such settings indicate that the base station uses the physical subchannels #1, #2, and the like that have "1" set in the corresponding bitmaps. In the following description, the physical subchannels having "1" set in the corresponding bitmaps are sometimes referred to as "used physical subchannels".

Subsequently, the base station sequentially numbers (performs numbering of) the used physical subchannels. In the following description, each used physical subchannel that has been numbered is sometimes referred to as "logical subchannel", and the number specified after the "#" sign in each logical subchannel is sometimes referred to as "logical subchannel number". In the example illustrated in FIG. 16, the base station maps the physical subchannel #1 onto the logical subchannel "0" and maps the physical subchannel #2 onto the logical subchannel "1". To such logical subchannels, the base station assigns data that is to be communicated with the MS.

Meanwhile, generally, the base station as described above forms cells or sectors (hereinafter, simply referred to as "cells") that have different frequency bands from the frequency bands of cells formed by a base station installed adjacent to the abovementioned base station (hereinafter, referred to as "adjacent base station").
That is to avoid interference between the cells formed by the abovementioned base station and the cells formed by the adjacent base station (hereinafter, referred to as "adjacent cells").

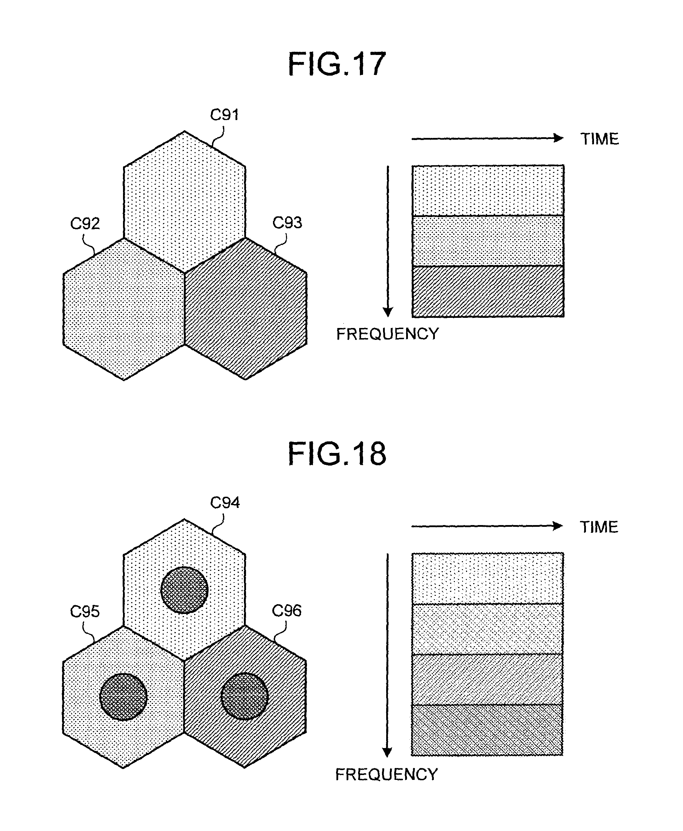

The related explanation is given in concrete terms with reference to FIG. 17. In the example illustrated in FIG. 17, the wireless communication system divides the frequency domain assigned to the entire system (hereinafter, referred to as "entire frequency domain") into three frequency domains. Then, from among the three divided frequency domains, the wireless communication system assigns a frequency domain to each base station in such a way that the frequency domains assigned to adjacent base stations are different. Each base station then forms cells C91 to C93 of the frequency domain assigned thereto.

In the case of dividing the entire frequency domain into three frequency domains as illustrated in the example in FIG. 17, the frequency domain usable in each cell is one-third of the entire frequency domain. However, that leads to a decrease in the throughput of the entire system. In that regard, a technology has been proposed in recent years in which the entire frequency domain is divided into four frequency domains, out of which three frequency domains are independently assigned to the base stations and the remaining fourth frequency domain is assigned among all base stations (see Patent Document 1).

This technology is explained in concrete terms with reference to FIG. 18. As illustrated in FIG. 18, among cells C94 to C96, two frequency domains (a different frequency domain for each base station and a common frequency domain for all base stations) are used. At that time, the central portion of each cell is formed by the frequency domain assigned in common to all base stations. By forming the cells in this way, it becomes possible to make efficient use of the frequency domains. Hence, the throughput of the entire system is enhanced as compared to the example illustrated in FIG. 17.

Patent Document 1: Japanese Laid-open Patent Publication No. 2004-159345
Non-patent Document 1: IEEE Std 802.16TM-2004
Non-patent Document 2: IEEE Std 802.16eTM-2005

### DISCLOSURE OF INVENTION

### PROBLEM TO BE SOLVED BY THE INVENTION

However, in the abovementioned conventional technology, a decline occurs in the frequency usage efficiency. For example, when the cells are formed as illustrated in FIG. 17, the frequency usage efficiency declines due to the fact that subcarriers having the same frequency cannot be used at all among adjacent base stations. Therein, the cells can be formed as illustrated in FIG. 18 so as to allow the use of subcarriers having the same frequency among adjacent base stations. However, in that case, the cell radius available for subcarrierers having the same frequency becomes restricted.

Besides, the abovementioned issues are not confined to a wireless communication system based on the 802.16d specification, the 802.16e specification, or the 802.16m specification and can arise in any other system in which adjacent wireless communication devices are capable of making use of common frequencies.

The present invention has been made to provide a base station, a communication method, a subcarrier assigning method, and a subcarrier assigning program that enable achieving enhancement in the frequency usage efficiency.

### MEANS FOR SOLVING PROBLEM

According to a first aspect, used is a base station that includes a transmitter or a receiver that performs wireless communication with a mobile station being under control of the base station; and a control unit that controls the transmitter or the receiver, and performing wireless communication with the mobile station being under control of the base station by making use of such subchannels which not only have different combinations of subcarriers when compared to any subchannel in a first subchannel group that is used by an adjacently-installed adjacent base station that performs wireless communication with a mobile station being under control thereof, but also include same subcarriers as subcarriers assigned to any one of subchannels in the first subchannel group.

According to a second aspect, used is a communication method that includes, by a base station, controlling a transmitter or a receiver and sending a signal as a notification that a mobile station being under control of the base station is assigned with such subchannels which not only have different combinations of subcarriers when compared to any subchannel in a first subchannel group that is used by an adjacently-installed adjacent base station that performs wireless communication with a mobile station being under control thereof, but also include same subcarriers as subcarriers assigned to any one of subchannels in the first subchannel group; and by the mobile station being under control of the base station, performing wireless communication with the base station according to the notification.

According to a third aspect, provided are an assigning unit that assigns, to a subchannel used during communication with a mobile station, such a combination of subcarriers that is different from a combination of subcarriers assigned to a subchannel by an adjacent base station installed adjacent to the base station; and a specifying unit that specifies unused subchannels that are the subchannels not used during communication with a mobile station from among the subchannels that have been assigned with subcarriers by the assigning unit.

According to a fourth aspect, provided are a specifying unit that specifies, from among subchannels usable for communication, an unused subchannel that is a subchannel not used during communication with a mobile station; and an assigning unit that assigns, to the subchannel specified as the unused subchannel by the specifying unit, such a combination of subcarriers that is different from a combination of subcarriers assigned to a subchannel by an adjacent base station that is installed adjacent to the base station.

### EFFECT OF THE INVENTION

It becomes possible to enhance the frequency usage efficiency.

### BRIEF DESCRIPTION OF DRAWINGS

FIG. 1 is a diagram for explaining a subcarrier assigning method implemented by a base station according to a first embodiment.
FIG. 2 is a diagram of exemplary MSs located in a cell.
FIG. 3 is a diagram for explaining the interference encountered from an adjacent cell.
FIG. 4 is a diagram of a configuration of the base station according to the first embodiment.
FIG. 5 is a diagram for explaining an assigned-subcarrier finding operation performed by a control unit.
FIG. 6 is a diagram for explaining UL_PermBase set in base stations.
FIG. 7 is a diagram illustrating an example of specifying used subchannels or unused subchannels.
FIG. 8 is a diagram of a configuration example of a wireless frame in a wireless interface.
FIG. 9 is a diagram of exemplary resources assigned to MSs.
FIG. 10 is a diagram of some of the parameters included in an UCD message.
FIG. 11 is a diagram of bitmap information according to the first embodiment.
FIG. 12 is a diagram of a configuration of an MS that performs communication with the base station according to the first embodiment.
FIG. 13 is a flowchart for explaining the subcarrier assigning operation performed by the base station according to the first embodiment.
FIG. 14 is a diagram for explaining some of the advantages of the base station according to the first embodiment.
FIG. 15 is a diagram for explaining some of the advantages of the base station according to the first embodiment.
FIG. 16 is a diagram for explaining the conventional technology.
FIG. 17 is a diagram for explaining the conventional technology.
FIG. 18 is a diagram for explaining the conventional technology.

### EXPLANATIONS OF LETTERS OR NUMERALS

- 20, 20a to 20d: MS
- 21: Antenna
- 22: Duplexer
- 23: Application processing unit
- 24: Packet buffer unit
- 25: PDU generating unit
- 26: Sending unit
- 27: Control unit
- 27a: Memory unit
- 28: Code generating unit
- 29: Control message generating unit
- 30: Receiving unit
- 31: Wireless quality measuring unit
- 32: MAP information analyzing unit
- 33: Control message extracting unit
- 34: Packet generating unit
- 100, 100a, 100b, 200: Base station
- 101: Antenna
- 102: Duplexer
- 103: NW interface
- 104: Packet identifying unit
- 105: Packet buffer unit
- 106: PDU generating unit
- 107: Control unit
- 107a: Memory unit
- 108: MAP information generating unit
- 109: Control message generating unit
- 110: Sending unit
- 111: Receiving unit
- 112: Code receiving unit
- 113: Control message extracting unit
- 114: Packet generating unit

### BEST MODE(S) FOR CARRYING OUT THE INVENTION

Exemplary embodiments of the present invention are described below with reference to the accompanying drawings. In the following embodiments, the explanation is given for a case when the WiMAX (Worldwide Interoperability for Microwave Access) technology is implemented as a wireless communication system. However, the scope of the present invention is not limited to that case. That is, the present invention can be applied in general to wireless communication systems that perform communication using subchannels made of subcarriers. Meanwhile, in the following embodiments, the explanation is given for a case of using the PUSC method as the subcarrier assigning method. However, alternatively, other subcarrier assigning methods such as the FUSC method or the like can also be implemented. Moreover, in the following embodiments, the explanation is given for a case of applying the present invention to the UL (Uplink) communication. However, the scope of the present invention is not limited to that case, and it is also possible to apply the present invention to the DL (Downlink) communication.

### First embodiment

Firstly, explained below is the subcarrier assigning method implemented by a base station 100 according to a first embodiment. A wireless communication system including the base station 100 according to the first embodiment allows adjacent base stations to use subcarriers having common frequencies. For example, in the first embodiment, the wireless communication system does not make divisions of the entire frequency domain and assigns the entire frequency domain among all base stations. Then, to each physical subchannel, the base station 100 according to the first embodiment assigns the subcarriers within the frequency domain assigned thereto. At that time, to each physical subchannel, the base station 100 assigns such a combination of subcarriers that is different from the combinations of subcarriers assigned to each physical subchannel by the corresponding adjacent base stations.

Thus, it is ensured that the combination of subcarriers assigned to any one of physical subchannels X that are used by a base station 100a to perform wireless communication with an MS is not repeated for any physical subchannel that is used by a base station 100b to perform wireless communication with an MS. In the base station 100a, it is preferable that some or all of the physical subchannels that are used for the purpose of wireless communication with an MS be formed to have that property of the physical subchannels X.

For example, the base station 100 controls a transmitter or a receiver, and sends a signal to an MS under its control as a notification that the MS is assigned with such subchannels which not only have different combinations of subcarriers when compared to any subchannel in a first subchannel group that is used by an adjacent base station, which is installed adjacent to the base station 100, for the purpose of performing wireless communication with an MS under its control, but also include the same subcarriers that are assigned to any one of the subchannels in the first subchannel group. Then, the MS under control follows the notification and accordingly performs wireless communication with the base station.

The base station 100 can specify, as used physical subchannels, all the physical subchannels that have been assigned with subcarriers. Then, the base station 100 uses such logical subchannels for the purpose of communication with an MS. Alternatively, from among the physical subchannels (logical subchannels) that have been assigned with subcarriers, some subchannels can be kept unused while performing communication with the MS. Thus, although there occurs overlapping of the subcarriers that are usable by an adjacent base station to perform wireless communication with an MS, the abovementioned subcarrier assigning method makes it possible to avoid the possibility of a situation in which the adjacent base stations use the exactly same subcarriers during the actual communication, thereby making it possible to prevent interference. For example, in a case when the base station 100a assigns the logical subchannel "0" (subcarriers #1, #6, #13, #19, #21) during the actual communication and the base station 100b also assigns the logical subchannel "0" (subcarriers #2, #5, #6, #12, and #23) during the actual communication, the base station 100a uses only the subcarrier #6 in an overlapping manner and does not use the other subcarriers #1, #13, #19, and #21 in an overlapping manner.

In the following explanation, the logical subchannels that are specified for the use in communication with the MS are sometimes referred to as "used subchannels", and the subcarriers included in the used subchannels are sometimes referred to as "used subcarriers". Similarly, the logical subchannels that are not specified for the use in communication with the MS are sometimes referred to as "unused subchannels", and the subcarriers included in the unused subchannels are sometimes referred to as "unused subcarriers".

Herein, as an example, the base station 100 keeps the number of unused subchannels to smaller than two-thirds of the number of physical subchannels in the entire frequency domain. Consequently, as compared to the conventional wireless communication system illustrated in FIG. 17, the throughput of the entire system can be enhanced. More particularly, in the conventional wireless communication system illustrated in FIG. 17, each base station can make use of a frequency domain not greater than one-third of the entire frequency domain. In contrast, since the base station 100 according to the first embodiment keeps the number of unused subchannels to smaller than two-thirds of the number of physical subchannels in the entire frequency domain, it becomes possible to use a frequency domain equal to or greater than one-third of the entire frequency domain during the communication with an MS. As a result, the throughput of the entire system can be enhanced.

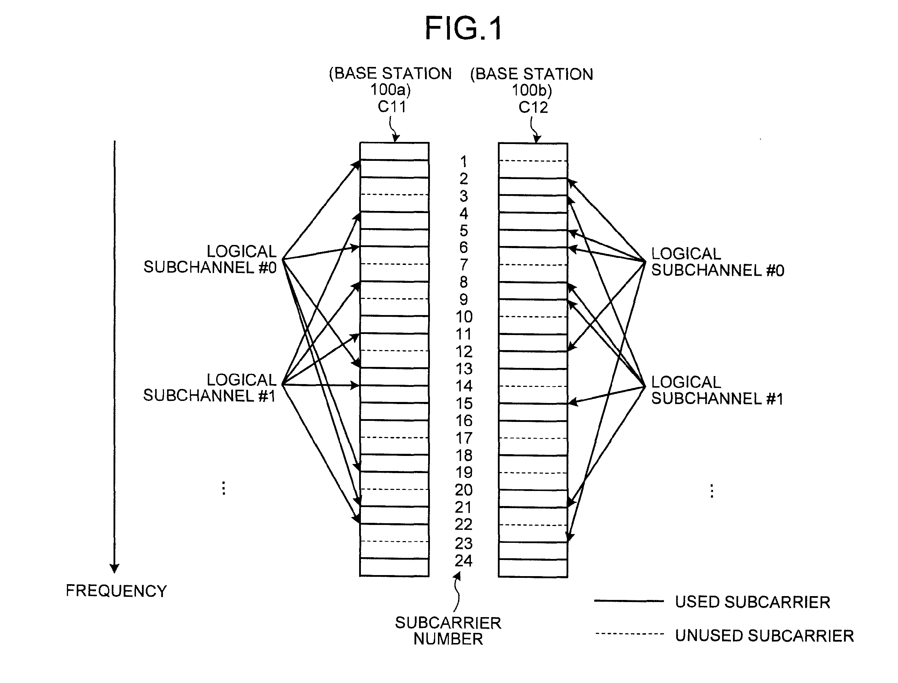

Explained below in concrete terms with reference to FIGS. 1 to 3 is the subcarrier assigning method implemented by the base station 100 according to the first embodiment. FIG. 1 is a diagram for explaining the subcarrier assigning method implemented by the base station 100 according to the first embodiment. In the following explanation, in order to distinguish between a plurality of base stations, the base station 100 according to the first embodiment is sometimes referred to by appending a letter at the end of "base station 100". For example, the base station 100 according to the first embodiment is sometimes referred to as "base station 100x".

In FIG. 1, a cell C11 is formed by the base station 100a, while a cell C12 is formed by the base station 100b. Herein, it is assumed that the base station 100a and the base station 100b are installed adjacent to each other. Therefore, the cell C11 and the cell C12 are positioned adjacent to each other. Moreover, in FIG, 1, inside the cell C11 as well as the cell C12, solid lines represent used subcarriers and dashed lines represent unused subcarriers.

As illustrated in FIG. 1, the base station 100a assigns subcarriers #1, #6, #13, #19, and #21 to a logical subchannel #0. Moreover, the base station 100a assigns subcarriers #4, #8, #11, #14, and #22 to a logical subchannel #1. Besides, the base station 100a specifies subcarriers #3, #7, #9, #12, #17, #20, and #23 as unused subcarriers.

Similarly, the base station 100b assigns subcarriers #2, #5, #6, #12, and #23 to the logical subchannel #0. Moreover, the base station 100b assigns subcarriers #3, #8, #9, #15, and #21 to the logical subchannel #1. Besides, the base station 100b specifies subcarriers #1, #7, #10, #14, #17, #19, and #22 as unused subcarriers.

Herein, the base station 100a and the base station 100b do not specify the unused subcarriers on a per subcarrier basis, but specify unused subchannels on a per logical subchannel basis. For example, as an unused subchannel, the base station 100a specifies a logical subchannel including the subcarriers #3, #7, #9, #12, #17, #20, and #23.

In this way, the base station 100a assigns a different combination of subcarriers to the logical subchannel #0 from the combination of subcarriers assigned to the logical subchannel #0 by the base station 100b. Regarding the logical subchannel #1 too, the base station 100a assigns a different combination of subcarriers from the combination of subcarriers assigned by the base station 100b. Thus, the combination of subcarriers assigned to a logical subchannel #i by the base station 100a is different from the combination of subcarriers assigned to a logical subchannel #j by the base station 100b.

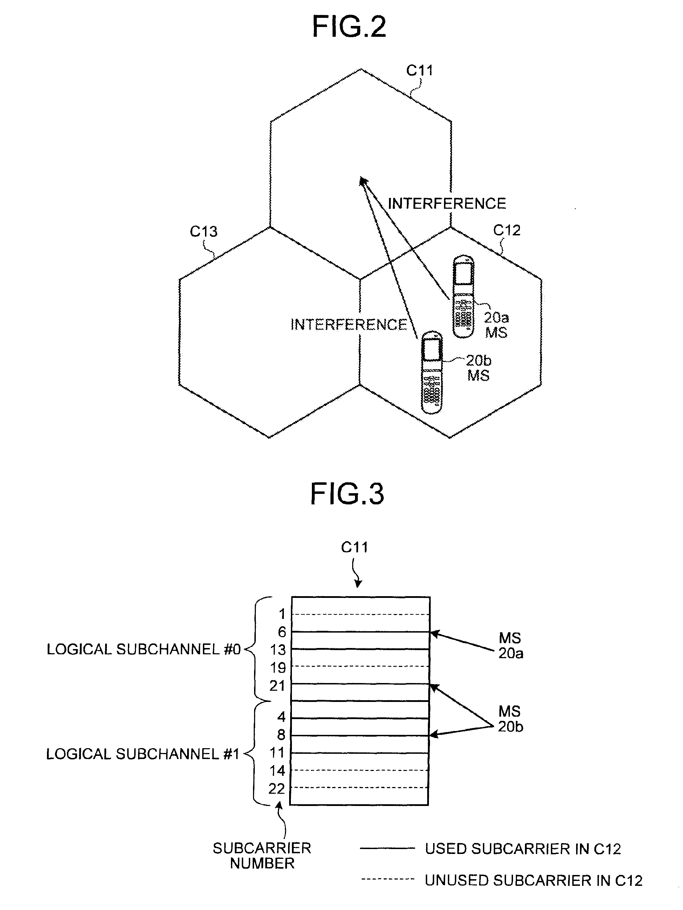

Under such conditions, it is assumed that predetermined MSs are located in the cell C12. Regarding that case, the explanation is given with an example illustrated in FIG. 2. Herein, FIG. 2 is a diagram of exemplary MSs located in the cell C12. As illustrated in FIG. 2, MSs 20a and 20b are located in the cell C12. In this case, with respect to each MS, the base station 100b determines a logical subchannel that is to be used during the UL communication.

Herein, with respect to the MS 20a, the base station determines that the logical subchannel #0 is to be used during the UL communication. Similarly, with respect to the MS 20b, the base station determines that the logical subchannel #1 is to be used during the UL communication.
As illustrated in FIG. 1, in the cell C12, the logical subchannel #0 is assigned with the subcarriers #2, #5, #6, #12, and #23. Hence, in the case of UL communication between the base station 100b and the MS 20a, there is a possibility that, in the cell C11, the frequency bands of the subcarriers #2, #5, #6, #12, and #23 encounter interference. Similarly, in the case of UL communication between the base station 100b and the MS 20b, there is a possibility that, in the cell C11, the frequency bands of the subcarriers #3, #8, #9, #15, and #21 encounter interference.

Regarding the interference encountered by the cell C11 from the cell C12, the explanation is given below in concrete terms with reference to FIG. 3. Herein, FIG. 3 is a diagram for explaining the interference encountered from the adjacent cell C12. In FIG. 3, solid lines illustrated inside the cell C11 represent the used subcarriers in the cell C12 and dashed lines illustrated inside the cell C11 represent the unused subcarriers in the cell C12.

Firstly, the focus is placed on the interference encountered by the logical subchannel #0 in the cell C11 when the base station 100b performs the UL communication with the MS 20a and the MS 20b. Herein, it is likely that the subcarriers #6 and #21 assigned to the logical subchannel #0 in the cell C11 encounter interference. This is because the subcarrier #6 is assigned to the logical subchannel #0 in the cell C12 and the subcarrier #21 is assigned to the logical subchannel #1 in the cell C12. In contrast, it is unlikely that the subcarriers #1 and #19 assigned to the logical subchannel #0 in the cell C11 encounter interference. This is because, in the cell C12, the subcarriers #1 and #19 are specified to be unused subcarriers.

The same can be said regarding the logical subchannel #1 in the cell C11. More particularly, it is likely that the subcarrier #8 assigned to the logical subchannel #1 encounters interference, but it is less likely that the subcarriers #14 and #22 assigned to the logical subchannel #1 encounter interference.

In this way, the logical subchannels #0 and #1 in the cell C11 encounter dispersive interference from the cell C12. More particularly, in the logical subchannel #0, all of the subcarriers assigned thereto encounter interference not at the same time but in a dispersive manner. Meanwhile, the logical subchannels #0 and #1 in the cell C11 include such subcarriers that are specified to be unused subcarriers in the cell C12. Thus, the logical subchannels #0 and #1 in the cell C11 include such subcarriers that are unlikely to encounter interference. Hence, it becomes possible for the base station 100a to prevent a situation in which a particular logical subchannel encounters intensive interference.

Moreover, regarding the degree of interference encountered by a particular logical subchannel too, the base station 100a can ensure that the interference is dispersive. With reference to the abovementioned example, as illustrated in FIG. 2, the MS 20b is located farther from the base station 100a than the MS 20a. Hence, it is conceivable that the cell C11 encounters a large degree of interference from the MS 20a than the MS 20b. Thus, regarding the logical subchannel #0 in the cell C11 illustrated in FIG. 3, it is conceivable that the degree of interference with respect to the subcarrier #6 is different from the degree of interference with respect to the subcarrier #21.

Hence, for example, even if the subcarrier #6 encounters a large degree of interference thereby making it unsuitable for the use in communication, the base station 100a can communicate with an MS using the other subcarriers #1, #13, #19, and #21.

As described above, to each physical subchannel, the base station 100 according to the first embodiment assigns such a combination of subcarriers that is different from the combinations of subcarriers assigned to each physical subchannel by the corresponding adjacent base stations. Moreover, the base station 100 according to the first embodiment specifies a predetermined number of logical subchannels as unused subchannels. Because of that, the base station 100 according to the first embodiment can ensure that the interference encountered from the adjacent base stations is dispersive and can, on average, hold down the interference encountered from the adjacent base stations.

Besides, for example, the base station 100 according to the first embodiment can assign the entire frequency domain thereby enabling achieving enhancement in the throughput of the entire system. Particularly, as described above, each base station according to the first embodiment can ensure that the interference encountered from the adjacent base stations is dispersive and can, on average, hold down the interference encountered from the adjacent base stations. Hence, even if the number of used subchannels is specified to be equal to or greater than one-third or two-thirds of the physical subchannels in the entire frequency domain, it is less likely that the interference causes trouble in communication. Hence, the base station 100 according to the first embodiment can specify the number of used subchannels to be equal to or greater than one-third or two-thirds of the physical subchannels in the entire frequency domain. As a result, as compared to the conventional wireless communication system illustrated in FIG. 17 or FIG. 18, the throughput of the entire system can be enhanced.

As illustrated in FIG. 18, when the cells are formed using a plurality of frequency domains, the degree of interference varies according to the frequency domains. Thus, for example, if the conventional technology illustrated in FIG. 18 is implemented during the UL communication; then, for each different frequency domain, the base station has to perform control of the transmission power instructed to an MS, perform setting of the MCS (Modulation and Coding Scheme), and perform control of the subchannels to be assigned to an MS. For that reason, the base station happens to perform complex operations. In contrast, the base station 100 according to the first embodiment does not form different frequency domains inside a cell. Hence, even if an MS changes the location, the base station 100 is spared from frequently performing control (such as performing control of the transmission power instructed to an MS).

With reference to FIG. 18, every time an MS moves to a different frequency domain within the same cell, the conventional base station sends a control signal or a control message to the MS with the aim of regulating the transmission power. This is because, in the UL communication, the base station regulates the amount of transmission power to be instructed to the MS according to the degree of interference. However, such a control signal eats up the DL resources, thereby causing a decline in the throughput of the DL. In contrast, since the base station 100 according to the first embodiment does not form different frequency domains inside a cell, it is spared from sending a control signal as described above to an MS. Hence, no decline occurs in the throughput of the DL.

Moreover, as illustrated in FIG. 18, when the entire frequency domain is divided into four frequency domains, a single frequency domain becomes reduced in size than the conventional frequency domain. Hence, if MSs are located disproportionately in a particular frequency domain, then there is a possibility that the base station becomes unable to reply to the resource assigning requests issued by all MSs. In contrast, the base station 100 according to the first embodiment does not form different frequency domains inside a cell. Hence, even if MSs are located disproportionately at a particular location inside the cell, the base station 100 does not have to face a situation in which it becomes unable to reply to the resource assigning requests issued by all MSs.

As described above, the base station 100 according to the first embodiment can enhance the throughput of the wireless communication system by performing simple operations and without causing a decline in the DL throughput.

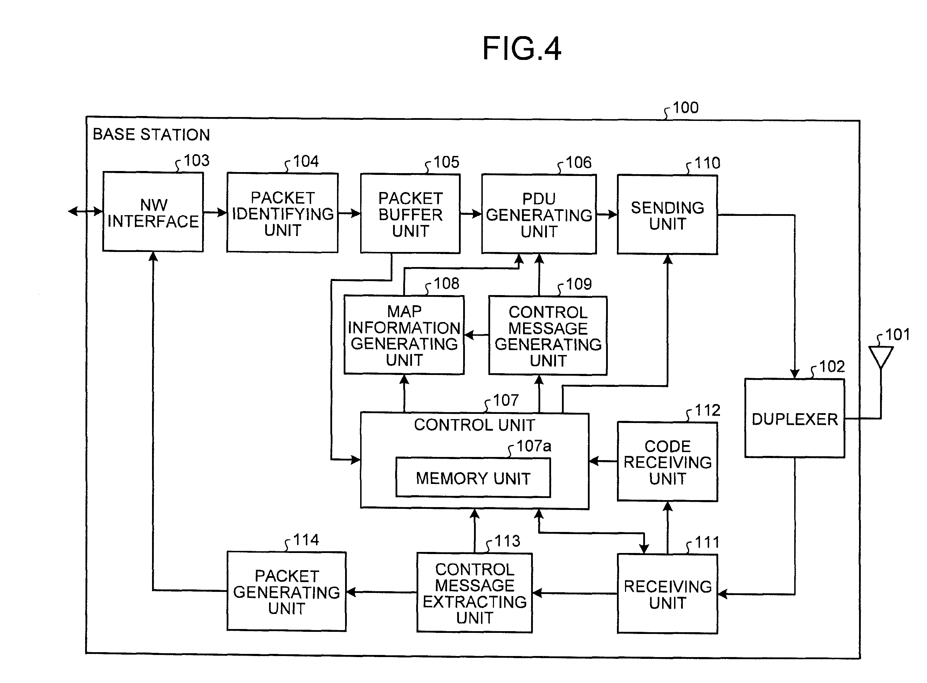

Explained below with reference to FIG. 4 is a configuration of the base station 100 according to the first embodiment. FIG. 4 is a diagram of a configuration of the base station 100 according to the first embodiment. As illustrated in FIG. 4, the base station 100 includes an antenna 101, a duplexer 102, a network interface (hereinafter, referred to as "NW interface") 103, a packet identifying unit 104, a packet buffer unit 105, a PDU (Protocol Data Unit) generating unit 106, a control unit 107, a MAP information generating unit 108, a control message generating unit 109, a sending unit 110, a receiving unit 111, a code receiving unit 112, a control message extracting unit 113, and a packet generating unit 114.

The antenna 101 is a transceiving antenna serving a transmitting antenna and a receiving antenna. The duplexer 102 is a device for making the antenna 101 available for both transmission and reception of data. The NW interface 103 is an interface for communicating data with a wired network (e.g., a higher-level device in a core network) that is not illustrated.

Depending on the packets received from the wired network, the packet identifying unit 104 stores the packets in the appropriate packet buffer unit 105. Herein, the packet buffer unit 105 represents a storage area such as memory that is used to store the packets. The PDU generating unit 106 generates PDU data for the purpose of transmission using wireless frames.

The control unit 107 controls the base station 100 in entirety, and includes a memory unit 107a for storing information regarding used subchannel regions and unused subchannel regions (hereinafter, referred to as "used-unused information"), for storing information regarding used physical subchannels specified in the bitmap format (hereinafter, referred to as "bitmap information"), and for storing a value to be set in UL_PermBase.

Herein, regarding the bitmap information in the memory unit 107a according to the first embodiment, nothing but "1 (used)" is stored. This is because the base station 100 specifies all of the physical subchannels as used physical subchannels. However, needless to say, it is possible to not specify some physical subchannels as used physical subchannels.

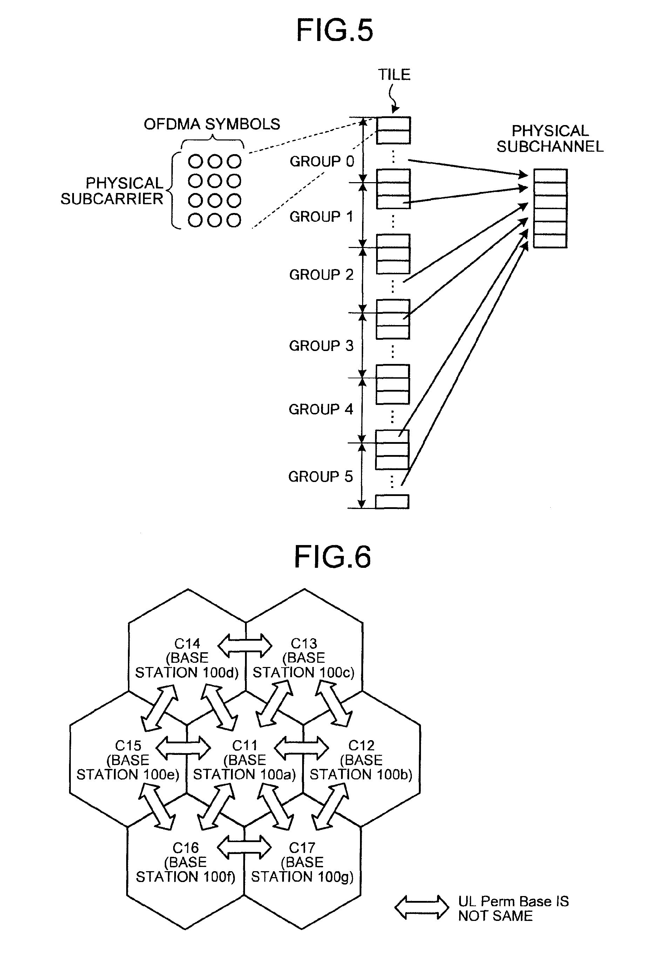

In the UL_PermBase in the memory unit 107a according to the first embodiment, a value is set that is different from the values set in the UL_PermBase of the adjacent base stations. This is because, to each physical subchannel, such a combination of subcarriers is assigned that is different from the combinations of subcarriers assigned to each physical subchannel by the adjacent base stations. Regarding this point, detailed explanation is given later with reference to FIG. 6.

Using the information stored in the memory unit 107a, the control unit 107 according to the first embodiment performs various operations. More particularly, the control unit 107 performs an operation of finding the combinations of subcarriers to be assigned to the physical subchannels (assigned-subcarrier finding operation). Moreover, the control unit 107 performs an operation of assigning resources to the MSs (scheduling operation). Furthermore, the control unit 107 performs an operation of sending control messages to the MSs (control message sending operation).

Explained below in detail are the various operations performed by the control unit 107. In the following description, the operations performed by the control unit 107 are explained in the order of (A) assigned-subcarrier finding operation, (B) scheduling operation, and (C) control message sending operation.

Firstly, explained with reference to FIG. 5 is (A) assigned-subcarrier finding operation performed by the control unit 107. FIG. 5 is a diagram for explaining the assigned-subcarrier finding operation performed by the control unit 107. As illustrated in FIG. 5, for example, with respect to three OFDMA symbols, the control unit 107 treats subcarrier groups of a combination of four physical subcarriers (thus, 12 subcarriers in all) as a single tile. That tile is grouped once every predetermined count. In the example illustrated in FIG. 5, the tile is divided into five groups, namely, group 0 to group 5. The control unit 107 makes use of Equation (1) mentioned below and selects six tiles to be assigned to a single physical subchannel. Herein, the FFT size is assumed to be 1024.

Tiles(s, n) = Nsubchannels·n + (Pt[(s + n) mod Nsubchannels] + UL_PermBase) mod Nsubchannels (1)

In Equation (1) mentioned above, "s" represents the physical subchannel number and "n" represents an index value of the tile. More particularly, since six tiles are included in a single physical subchannel, "n" can take an integer from "0" to "5" as its value. "Nsubchannels" represents the total number of physical subchannels. As given in the example illustrated in FIG. 5, when the FTT size is 1024, "Nsubchannels" takes "35" as its value. "Pt[]" represents a sorting array. "UL_PermBase" represents a seed value of sorting as set by the control unit 107.

The control unit 107 makes use of Equation (1) and selects the tiles to be assigned to each physical subchannel. More particularly, with respect to a single subchannel, the control unit 107 selects a single tile each from the group 0 to the group 5. Then, to the sending unit 110 and the receiving unit 111, the control unit 107 outputs the information regarding the combinations of tiles (hereinafter, referred to as "tile combination information"). Herein, for example, the tile combination information indicates that the physical subchannel #0 is formed with the combination of tiles #0, #35, #70, #105, #140, and #175; while the physical subchannel #1 is formed with the combination of tiles #1, #36, #71, #106, #141, and #176.

Meanwhile, as mentioned above, the UL_PermBase that is used in Equation (1) is set to a value different than the values set in the UL_PermBase of the adjacent base stations. The related explanation is given in concrete terms with reference to FIG. 6. Herein, FIG. 6 is a diagram for explaining the UL_PermBase set in the base stations. In FIG. 6, cells C11 to C17 are formed by base stations 100a to 100g, respectively.

In the example illustrated in FIG. 6, in memory units 107a to 107g of the base stations 100a to 100g, respectively, each UL_PermBase is set to a value that is different from the UL_PermBase set in the adjacent base stations. More particularly, in each pair of base stations having a bidirectional arrow illustrated therebetween in FIG. 6, different values of the UL_PermBase are set. For example, the base station 100a has a different value of the UL_PermBase from the values of the UL_PermBase in the base stations 100b to 100g.

The reason for setting different values of the UL_PermBase among adjacent base stations is explained below. As described above, the control unit 107 makes use of Equation (1) and selects the tiles to be assigned to the subchannels. Thus, if the UL_PermBase in Equation (1) is set to have different values, then it becomes possible to assign different tiles to each subchannel. Hence, by setting different values of the UL_PermBase among adjacent base stations, the combination of subcarriers to be assigned to each physical subchannel can be kept different among adjacent base stations. For that reason, in the first embodiment, the UL_PermBase is set to different values among adjacent base stations.

Explained below is (B) scheduling operation performed by the control unit 107. Firstly, the control unit 107 sequentially numbers the physical subchannels, which have been assigned with subcarriers in the (A) operation, and treats the physical subchannels as logical subchannels. Then, based on the used-unused information stored in the memory unit 107a, the control unit 107 specifies each logical subchannel either as a used subchannel or as an unused subchannel.

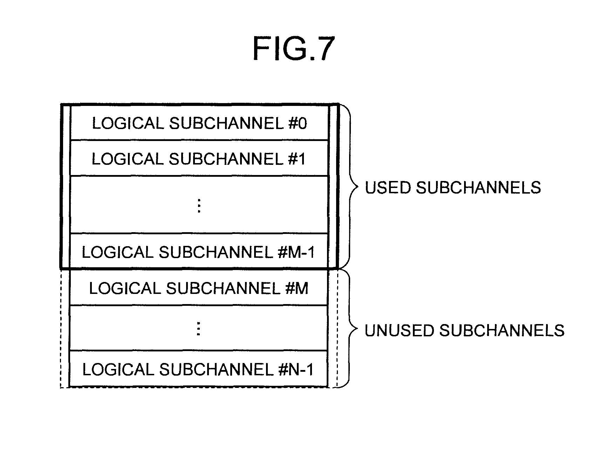

The related explanation is given in concrete terms with reference to FIG. 7. In the example illustrated in FIG. 7, it is assumed that the logical subchannels #0 to #N-1 are available for the base station 100 to use. In the example illustrated in FIG. 7, the control unit 107 specifies logical subchannels #0 to #M-1 as used subchannels while specifying logical subchannels #M to #N-1 as unused subchannels. Depending on the degree of interference from the adjacent cells, the control unit 107 determines the ratio of used subchannels and unused subchannels. However, smaller than two-thirds of the entire frequency domain is specified for unused subchannels. Hence, in the wireless communication system including the base station 100 according to the first embodiment, the throughput of the entire system can be enhanced in comparison with the conventional wireless communication system in which each base station is assigned with a frequency domain of one-third of the entire frequency domain.

Meanwhile, in the example illustrated in FIG. 7, the control unit 107 sequentially specifies, as the used subchannels, the logical subchannels starting from the logical subchannel #0 having the smallest logical subchannel number up to the logical subchannel #M-1. However, other logical subchannels can also be specified as the used subchannels. For example, the control unit 107 can specify the logical subchannels #1 to #M as the used subchannels, or can specify the logical subchannels #2 to #M+1 as the used subchannels. Thus, the control unit 107 can specify logical subchannels #L to #L+M-1 as the used subchannels. Herein, L is an integer equal to or greater than 0 as well as greater than N-M+1. Meanwhile, the control unit 107 can also specify the inconsecutive logical subchannels #0, #2, #4, and so on as the used subchannels.

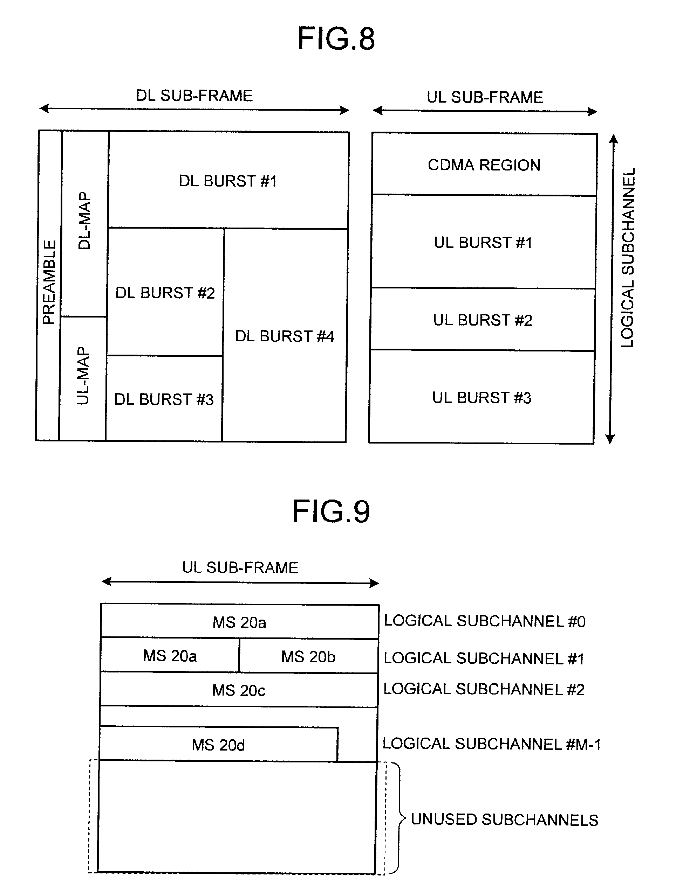

Once the used subchannels are determined, the control unit 107 determines the used subchannels to be assigned to each MS based on the status of packets stored in the packet buffer unit 105 or based on the control information (control signals or control messages) received from the MSs. That case is explained in concrete terms with reference to FIGS. 8 and 9. FIG. 8 is a diagram of a configuration example of a wireless frame in a wireless interface.

As illustrated in FIG. 8, the wireless frame includes a DL sub-frame and an UL sub-frame. The DL sub-frame includes a preamble, a DL-MAP, an UL-MAP, and DL-Bursts #1 to #4. The preamble is a synchronization signal transmitted by the base station 100 to an MS. Based on that synchronization signal, the MS synchronizes with the base station 100.

The DL-MAP is a message sent by the base station 100 to the MS and, more particularly, is assigned with configuration information and communication control information of the DL sub-frame. The UL-MAP is a message sent by the base station 100 to the MS and, more particularly, is assigned with configuration information and communication control information of the UL sub-frame. The DL bursts #1 to #4 are data transmission blocks and, more particularly, are assigned with the data transmitted to the MSs. In an identical manner, UL bursts #1 to #3 inside the UL sub-frame are data transmission blocks and, more particularly, are assigned with the data transmitted by the MSs to the base station 100.

With such a frame configuration, the various information mentioned above is communicated using the logical subchannels between the base stations and the MSs. The control unit 107 determines the configuration of the DL-Bursts #1 to #4 according to the data to be transmitted to each MS, and determines the configuration of the UL-Bursts #1 to #3 according to the control information (control signals or control messages) sent from each MS.

The related explanation is given in concrete terms with reference to FIG. 9. Herein, FIG. 9 is a diagram of exemplary resources assigned to the MSs. In FIG. 9 is illustrated an example of assigning UL resources to the MSs. In the example illustrated in FIG. 9, the control unit 107 assigns the logical subchannel #0 to the MS 20a, assigns the logical subchannel #1 to the MSs 20a and 20b, assigns the logical subchannel #2 to an MS 20c, and assigns the logical subchannel #M-1 to an MS 20d. Moreover, as illustrated in FIG. 9, the control unit 107 does not assign MSs to the unused subchannels.

Then, the control unit 107 outputs the information assigned in the abovementioned manner (hereinafter, referred to as "resource assignment information") to the MAP information generating unit 108, the sending unit 110, and the receiving unit 111. More particularly, the resource assignment information indicates that the logical subchannel #0 is assigned to the MS 20a, the logical subchannel #1 is assigned to the MSs 20a and 20b, and so on. By sending such information, the control unit 107 controls the sending operation of the sending unit 110 and the receiving operation of the receiving unit 111. Moreover, the control unit 107 controls the MAP information generating operation performed by the MAP information generating unit 108.

Explained below is (C) control message sending operation performed by the control unit 107. The control unit 107 sends the bitmap information and the UL_PermBase to the control message generating unit 109, and instructs the control message generating unit 109 to generate control messages.

Returning to the explanation with reference to FIG. 4, the MAP information generating unit 108 generates the DL-MAP and the UL-MAP based on the resource assignment information input by the control unit 107. More particularly, the MAP information generating unit 108 generates the UL-MAP by setting, in an UL-MAP IE (Information Element), a combination of each MS and the resource information of the UL-Burst corresponding to that MS. In an identical manner, the MAP information generating unit 108 generates the DL-MAP by setting, in a DL-MAP IE, a combination of one or more MSs and the resource information of the DL-Bursts assigned to those MSs.

The control message generating unit 109 follows instructions from the control unit 107 and generates control messages to be sent to the MSs. For example, when the bitmap information and UL_PermBase are input by the control unit 107, the control message generating unit 109 generates an UCD (Uplink Channel Description) message that is the communication control information in the UL. At that time, the control message generating unit 109 adds the bitmap information and the UL_PermBase in the UCD message.

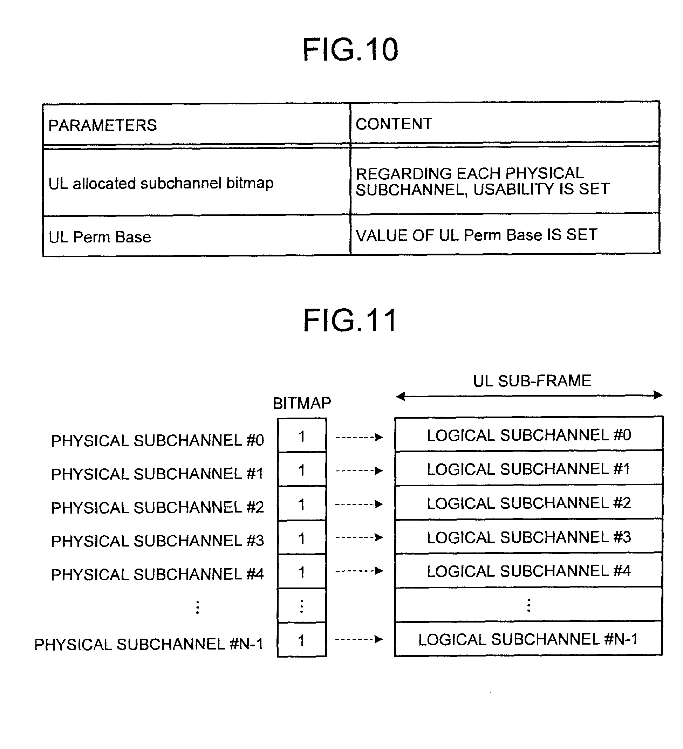

Explained below with reference to FIG. 10 is the bitmap information and the UL_PermBase included in an UCD message. FIG. 10 is a diagram of some of the parameters included in an UCD message. As illustrated in FIG. 10, an UCD message includes the parameters such as "UL allocated subchannel bitmap" and "UL Perm Base".

The "UL allocated subchannel bitmap" represents a region in which the used physical subchannels are represented in the bitmap format. The related explanation is given in concrete terms with reference to FIG. 11. Herein, FIG. 11 is a diagram of the bitmap information according to the first embodiment. As illustrated in FIG. 11, in the "UL allocated subchannel bitmap", the used-unused information indicating "1 (used)" or "0 (unused)" is set regarding the physical subchannels #0 to #N-1 that are usable by the base station 100. In the first embodiment, all of the physical subchannels are specified as used physical subchannels. Hence, as illustrated in FIG. 11, the bitmaps corresponding to the physical subchannels #0 to #N-1 are all set to "1".

According to the instructions from the control unit 107, the sending unit 110 performs encoding and modulation of the PDU data generated by the PDU generating unit 106, and outputs the data to a predetermined MS via the duplexer 102 and the antenna 101. More particularly, based on the tile combination information input by the control unit 107, the sending unit 110 assigns subcarriers to logical subchannels. Then, according to the resource assignment information input from the control unit 107, the sending unit 110 sends the PDU data.

The receiving unit 111 receives the data sent by an MS via the antenna 101 and the duplexer 102, and performs demodulation and decoding of the received data. More particularly, based on the tile combination information input by the control unit 107, the receiving unit 111 recognizes the subcarriers assigned to the logical subchannels. Then, according to the resource assignment information input from the control unit 107, the receiving unit 111 receives the data from an MS. From the data decoded by the receiving unit 111, the code receiving unit 112 receives control signals and outputs them to the control unit 107. Besides, from the data decoded by the receiving unit 111, the control message extracting unit 113 extracts control messages and outputs them to the control unit 107.

The packet generating unit 114 uses the data received by the receiving unit 111 and generates packets that are to be sent over the wired network (not illustrated). Then, the packet generating unit 114 sends the generated packets to the wired network via the NW interface 103.

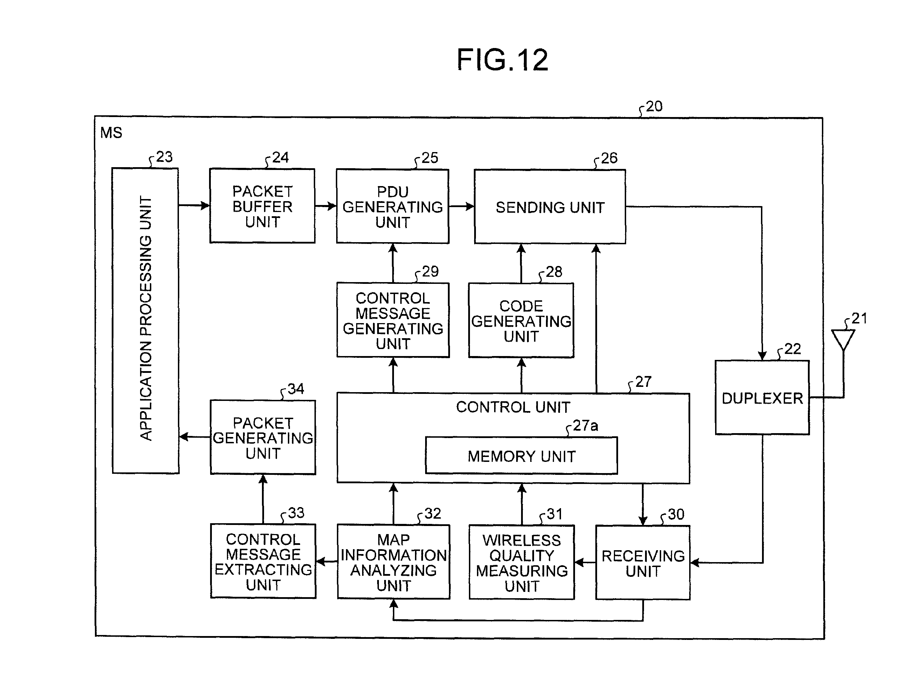

Explained below is a configuration of an MS that performs communication with the base station 100 according to the first embodiment. FIG. 12 is a diagram of a configuration of the MS 20 that performs communication with the base station 100 according to the first embodiment. As illustrated in FIG. 12, the MS 20 includes an antenna 21, a duplexer 22, an application processing unit 23, a packet buffer unit 24, a PDU generating unit 25, a sending unit 26, a control unit 27, a code generating unit 28, a control message generating unit 29, a receiving unit 30, a wireless quality measuring unit 31, a MAP information analyzing unit 32, a control message extracting unit 33, and a packet generating unit 34.

The antenna 21 is a device for communicating data with the base station 100. The duplexer 22 is a device for making the antenna 21 available for both transmission and reception of data. The application processing unit 23 processes, for example, an application having the mail delivery function or the like. The packet buffer unit 24 stores therein the packets to be sent to the base station 100.

The PDU generating unit 25 generates PDU data to be sent via wireless frames. The sending unit 26 performs encoding and modulation of the PDU data generated by the PDU generating unit 25, and outputs the data to the base station 100 via the duplexer 22 and the antenna 21.

The control unit 27 performs a scheduling operation based on the status of packets stored in the packet buffer unit 24 or based on the control information received from the base station 100. Besides, the control unit 27 includes a memory unit 27a, and controls the code generating unit 28 and the control message generating unit 29 described later. Herein, the memory unit 27a stores therein the information used for various operations performed by the control unit 27.

According to an instruction from the control unit 27, the code generating unit 28 generates signals for the CDMA (Code Division Multiple Access) code, or the HARQ ACK (Hybrid Automatic Repeat Request ACK), or the CQI (Channel Quality Indicator). The control message generating unit 29 generates, according to an instruction from the control unit 27, a control message to be sent to the base station 100.

The receiving unit 30 receives the signals that have been sent by the base station 100 via the antenna 21 and the duplexer 22, and performs demodulation and decoding of the received signals. The wireless quality measuring unit 31 measures the quality of the signals sent by the base station 100 and received by the receiving unit 30. Then, the wireless quality measuring unit 31 stores the quality measurement result in the memory unit 27a.

From the signals received by the receiving unit 30, the MAP information analyzing unit 32 obtains and analyzes the MAP information (the DL-MAP and the UL-MAP). From the signals received by the receiving unit 30, the control message extracting unit 33 obtains control messages (e.g., an UCD message). The packet generating unit 34 generates packets to be sent to the application processing unit 23.

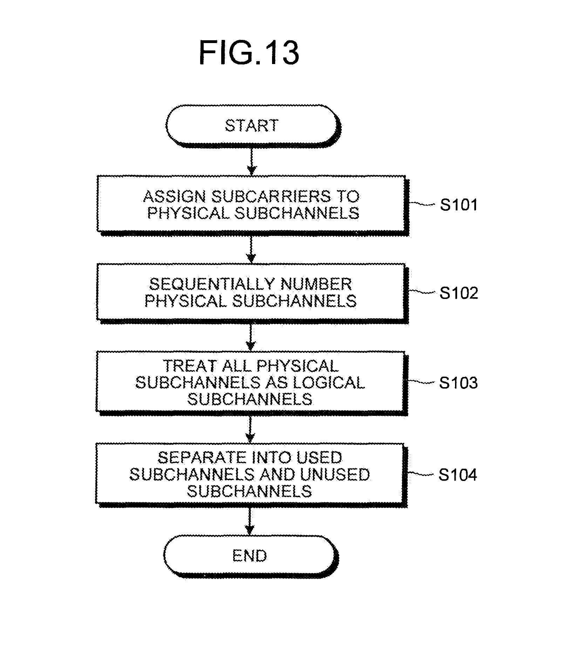

Explained below is a sequence of a subcarrier assigning operation performed by the base station 100 according to the first embodiment. FIG. 13 is a flowchart for explaining the subcarrier assigning operation performed by the base station 100 according to the first embodiment.

As illustrated in FIG. 13, the control unit 107 of the base station 100 substitutes the UL_PermBase, which is stored in the memory unit 107a, in Equation (1) given above and selects the subcarriers (tiles) to be assigned to physical subchannels (Step S101). Then, based on the tile combination information regarding the tiles selected by the control unit 107, the sending unit 110 and the receiving unit 111 assign the subcarriers to the physical subchannels.

Subsequently, the control unit 107 sequentially numbers the physical subchannels that have been assigned with subcarriers (Step S102), and treats the physical subchannels as logical subchannels. Herein, since the logical subchannels are used to distinguish between the used subchannels and the unused subchannels, the base station according to the first embodiment treats all physical subchannels as logical subchannels (Step S103).

Subsequently, based on the used-unused information stored in the memory unit 107a, the control unit 107 distinguishes each logical subchannel as either a used subchannel or an unused subchannel (Step S104).

Then, in the case of assigning the used subchannels to each MS, the control unit 107 refers to the control information received from the MSs and determines the used subchannels to be assigned to each MS. At that time, to each MS, the control unit 107 assigns those physical subchannels which are specified as used subchannels. Subsequently, the control unit 107 instructs the MAP information generating unit 108 to generate the MAP information.

As described above, the base station 100 according to the first embodiment can assign the entire frequency domain, thereby enabling achieving enhancement in the throughput of the entire system. Moreover, since the base station 100 according to the first embodiment does not form different frequency domains inside a cell, the throughput of the entire system can be enhanced.

Furthermore, to each physical subchannel, the base station 100 according to the first embodiment assigns such a combination of subcarriers that is different from the combinations of subcarriers assigned to each physical subchannel by the corresponding adjacent base stations. Moreover, as unused subcarriers, the base station 100 according to the first embodiment specifies different subcarriers from the subcarriers specified by the corresponding adjacent base stations. Because of that, the base station 100 according to the first embodiment can ensure that the interference encountered from the adjacent base stations is dispersive; and can, on average, hold down the interference encountered from the adjacent base stations.

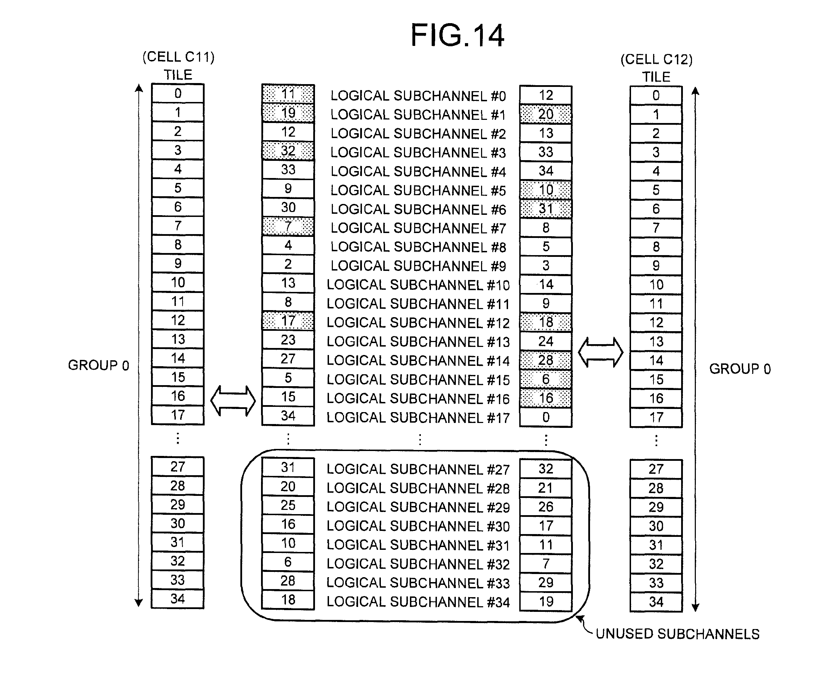

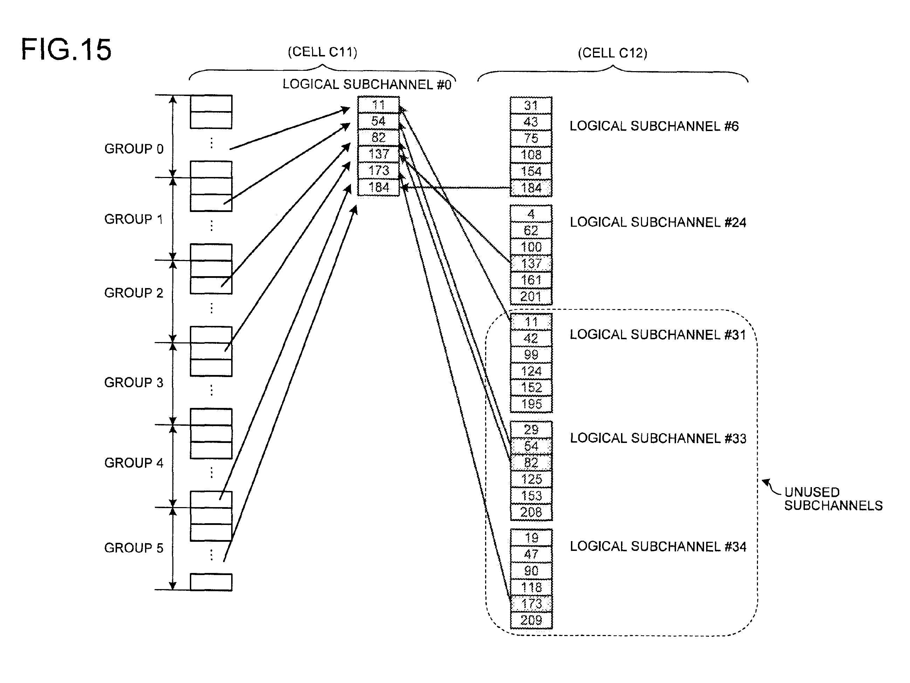

Such advantages are explained with reference to FIGS. 14 and 15. FIGS. 14 and 15 are diagrams for explaining some of the advantages of the base station 100 according to the first embodiment. Firstly, with reference to FIG. 14, the advantages of the base station 100 are explained by focusing on a single group 0 (tile group). In FIG. 14, the group 0 in the cells C11 and C12 is illustrated. Herein, it is assumed that the cell C11 and the cell C12 are positioned adjacent to each other. Moreover, it is assumed that "0" is set in the UL_PermBase in the cell C11 and "1" is set in the UL_PermBase in the cell C12.

As illustrated in FIG. 14, the group 0 is formed with the tiles #0 to #34. In the cell C11; the tiles #31, #20, #25, #16, #10, #6, #28, and #18 that are illustrated in an enclosed manner inside a rectangle in FIG. 14 are assigned to the unused subchannels. Similarly, in the cell C12; the tiles #32, #21, #26, #17, #11, #7, #29, and #19 that are illustrated in an enclosed manner inside a rectangle in FIG. 14 are assigned to the unused subchannels. Thus, in the cells C11 and C12, the tiles assigned to the unused subchannels are not the same. This is because, to each physical subchannel, the base station 100 assigns such a combination of subcarriers (tiles) that is different from the combinations of subchannels assigned by the corresponding adjacent base stations.

As a result, as illustrated with hatched lines in FIG. 14, regarding the tiles #11, #19, #32, #7, #17, ... not used in the cell C12; the cell C11 is less likely to encounter interference from the cell C12.

In an identical manner, as illustrated with hatched lines in FIG. 14, regarding the tiles #20, #10, #31, #18, #28, #6, and #16 not used in the cell C11, the cell C12 is less likely to encounter interference from the cell C11.

In this way, the base station 100 assigns, to each physical subchannel, such a combination of subcarriers (tiles) that is different from the combinations of subchannels assigned by the corresponding adjacent base stations. Moreover, the base station 100 also specifies the unused physical subchannels. Hence, it becomes possible to make use of such subcarriers (tiles) which do not encounter interference from the adjacent cells.

Explained below with reference to FIG. 15 are the advantages of the base station 100 by focusing on only the logical subchannel #0. In FIG. 15 is illustrated the logical subchannel #0 in the cell C11. Herein, in an identical manner to the example illustrated in FIG. 14, it is assumed that the cell C11 and the cell C12 are positioned adjacent to each other. Moreover, it is assumed that "0" is set in the UL_PermBase in the cell C11 and "1" is set in the UL_PermBase in the cell C12.

As illustrated in FIG. 15, the logical subchannel #0 in the cell C11 is assigned with the tiles #11, #45, #82, #137, #173, and #184. In the cell C12, those tiles are inconsecutively assigned to different logical subchannels. More particularly, the tile #11 is assigned to the physical subchannel #31, the tiles #54 and #82 are assigned to the physical subchannel #33, the tile #137 is assigned to the physical subchannel #24, the tile #173 is assigned to the physical subchannel #34, and the tile #184 is assigned to the physical subchannel #6.

Besides, the tiles #11, #54, #82, and #172 that are assigned to the logical subchannel #0 are specified as the unused subchannels in the cell C12. Thus, the tiles #11, #54, #82, and #172 assigned to the logical subchannel #0 are less likely to encounter interference from the cell C12.

In this way, regarding the tiles assigned to a single logical subchannel, the base station 100 according to the first embodiment is able to disperse the interference encountered from the adjacent cells and is able to prevent interference from the tiles specified as the unused subchannels in the adjacent cells.

### Second embodiment

In the example explained in the first embodiment, all physical subchannels are specified as the used physical subchannels (see FIG. 11), and the used subchannels and the unused subchannels are distinguished by referring to the logical subchannels. However, alternatively, the base station can make a distinction between the used subchannels and the unused subchannels at the time of specifying the used physical subchannels. Therein, in a second embodiment, the explanation is given regarding a base station 200 that makes a distinction between the used subchannels and the unused subchannels at the time of specifying the used physical subchannels.

The base station 200 according to the second embodiment makes a distinction between the used subchannels and the unused subchannels at the time of specifying the used physical subchannels in the bitmap format. More particularly, according to the first embodiment, the base station 100 sets "1" in the bitmaps corresponding to all physical subchannels as illustrated in FIG. 11. In contrast, the base station 200 sets "1" in the bitmaps corresponding to those physical subchannels which are used during communication with an MS, and sets "0" in the bitmaps corresponding to those physical subchannels that are not used during communication with an MS.

At that time, in the bitmaps, the base station 200 can set "1" or "0" either in a consecutive manner or in an inconsecutive manner. For example, with reference to the example illustrated in FIG. 11, the base station 200 can set "1" in the bitmaps corresponding to the consecutive physical subchannels #0 to #M-1 and can set "0" in the bitmaps corresponding to the consecutive physical subchannels #M to #N-1. Alternatively, the base station 200 can set "1" in the bitmaps corresponding to the inconsecutive physical subchannels #0, #2, #4, ... and can set "1" in the bitmaps corresponding to the inconsecutive physical subchannels #1, #3, #5, ...

Meanwhile, the base station 200 keeps the number of physical subchannels that have "0" set in the corresponding bitmaps to smaller than two-thirds of the number of physical subchannels in the entire frequency domain. Besides, in an identical manner to the base station 100 according to the first embodiment, the base station 200 uses the UL_PermBase having different values from the values of the UL_PermBase in the adjacent base stations.

As described above, in an identical manner to the base station 100, the base station 200 according to the second embodiment can enhance the throughput of the wireless communication system by performing simple operations. Moreover, the base station 200 according to the second embodiment can set the physical subchannels not used during communication with an MS in consecutive physical subchannel regions or in inconsecutive physical subchannel regions.

### Third Embodiment

Meanwhile, the base stations 100 and 200 explained in the abovementioned first and second embodiments, respectively, can also be put in execution in various different forms other than the abovementioned first and second embodiments. Therein, in a third embodiment, other embodiments of the abovementioned base station are explained.

### Unused subchannel region 1

In the abovementioned first and second embodiments, the explanation is given for an example in which each of the base stations 100 and 200 assigns regions smaller than two-thirds of the entire frequency domain to unused subchannels. However, each of the base stations 100 and 200 can use the unused subchannel regions for the purposes other than assigning data of an MS. For example, each of the base stations 100 and 200 can use the unused subchannel regions for the purpose of interference measurement. That enables making an efficient use of the unused subchannel regions.

### Unused subchannel region 2

Meanwhile, while specifying the unused subchannel region, each of the base stations 100 and 200 can also take into consideration the likelihood of interference encountered by each subcarrier. More particularly, the degree of interference differs according to the conditions such as whether the frequency bands are identical, or whether the frequency bands are similar, or whether the frequency bands are in a multiplication relation. Therein, for such logical subchannels which include subcarriers likely to encounter interference from the adjacent base stations, each of the base stations 100 and 200 can specify the unused subchannel regions.

### Unused subchannel region 3

Moreover, while specifying the unused subchannel region, each of the base stations 100 and 200 can change the number of logical subchannels depending on the number of MSs located therein. More particularly, smaller the number of MSs located therein, greater is the number of logical subchannels that are specified as the unused subchannels by each of the base stations 100 and 200. Thus, when a small number of MSs are located therein, each of the base stations 100 and 200 specifies a greater number of logical subchannels as the unused subchannels. That enables achieving reduction in the oftenness of causing interference to the adjacent base stations. On the other hand, when a large number of MSs are installed therein, each of the base stations 100 and 200 specifies a smaller number of logical subchannels as the unused subchannels, thereby becoming possible to assign a lot of resources to the MSs located therein.

### System configuration

Meanwhile, the process functions performed in each of the base stations 100 and 200 described above are entirely or partially realized by a CPU (Central Processing Unit) or computer programs that are analyzed and executed by the CPU, or realized as hardware by wired logic.

Moreover, the constituent elements of the device illustrated in the drawings are merely conceptual, and need not be physically configured as illustrated. The constituent elements, as a whole or in part, can be separated or integrated either functionally or physically based on various types of loads or use conditions.

## Claims

1. A base station comprising:
a transmitter or a receiver that performs wireless communication with a mobile station being under control of the base station; and
a control unit that controls the transmitter or the receiver, and performing wireless communication with the mobile station being under control of the base station by making use of such subchannels which not only have different combinations of subcarriers when compared to any subchannel in a first subchannel group that is used by an adjacently-installed adjacent base station that performs wireless communication with a mobile station being under control thereof, but also include same subcarriers as subcarriers assigned to any one of subchannels in the first subchannel group.

2. A communication method comprising:
by a base station, controlling a transmitter or a receiver and sending a signal as a notification that a mobile station being under control of the base station is assigned with such subchannels which not only have different combinations of subcarriers when compared to any subchannel in a first subchannel group that is used by an adjacently-installed adjacent base station that performs wireless communication with a mobile station being under control thereof, but also include same subcarriers as subcarriers assigned to any one of subchannels in the first subchannel group; and
by the mobile station being under control of the base station, performing wireless communication with the base station according to the notification.

3. A base station comprising:
an assigning unit that assigns, to a subchannel used during communication with a mobile station, such a combination of subcarriers that is different from a combination of subcarriers assigned to a subchannel by an adjacent base station installed adjacent to the base station; and
a specifying unit that specifies unused subchannels that are the subchannels not used during communication with a mobile station from among the subchannels that have been assigned with subcarriers by the assigning unit.

4. The base station according to claim 3, wherein the specifying unit keeps the number of unused subchannels to smaller than two-thirds of the total number of subchannels.

5. The base station according to claim 3, wherein, as unused subchannels, the specifying unit specifies such subchannels which are likely to encounter interference with the adjacent base station.

6. The base station according to claim 3, wherein, smaller the number of mobile stations being under control of the base station, greater is the number of subchannels specified as unused subchannels by the specifying unit.

7. A base station comprising:
a specifying unit that specifies, from among subchannels usable for communication, an unused subchannel that is a subchannel not used during communication with a mobile station; and
an assigning unit that assigns, to the subchannel specified as the unused subchannel by the specifying unit, such a combination of subcarriers that is different from a combination of subcarriers assigned to a subchannel by an adjacent base station that is installed adjacent to the base station.

8. The base station according to claim 7, wherein the specifying unit keeps the number of unused subchannels to smaller than two-thirds of the total number of subchannels.

9. The base station according to claim 7, wherein, as unused subchannels, the specifying unit specifies such subchannels which are likely to encounter interference with the adjacent base station.

10. The base station according to claim 7, wherein, smaller the number of mobile stations being under control of the base station, greater is the number of subchannels specified as unused subchannels by the specifying unit.

11. A subcarrier assigning method implemented in a base station that performs communication with a mobile station, the subcarrier assigning method comprising:
an assigning step of assigning, by the base station, to a subchannel usable for communication with the mobile station, such a combination of subcarriers that is different from a combination of subcarriers assigned to a subchannel by an adjacent base station that is installed adjacent to the base station; and
a specifying step of specifying, by the base station, from among the subchannels that have been assigned with subcarriers at the assigning step, an unused subchannel that is a subchannel not used during communication with a mobile station.

12. A subcarrier assigning method implemented to control a base station that performs communication with a mobile station, the subcarrier assigning method comprising:
a specifying step of specifying, by the base station, from among subchannels usable for communication, an unused subchannel that is a subchannel not used during communication with a mobile station; and
an assigning step of assigning, by the base station, to the subchannel specified as the unused subchannel at the specifying step, such a combination of subcarriers that is different from a combination of subcarriers assigned to a subchannel by an adjacent base station that is installed adjacent to the base station.

13. A subcarrier assigning program causing a computer to execute:
assigning, to a subchannel usable for communication with a mobile station, such a combination of subcarriers that is different from a combination of subcarriers assigned to a subchannel by an adjacent base station that is installed adjacent to a base station; and
specifying, from among the subchannels that have been assigned with subcarriers at the assigning, an unused subchannel that is a subchannel not used during communication with a mobile station.

14. A subcarrier assigning program causing a computer to execute:
specifying, from among subchannels usable for communication, an unused subchannel that is a subchannel not used during communication with a mobile station; and
assigning, to the subchannel specified as the unused subchannel at the specifying, such a combination of subcarriers that is different from a combination of subcarriers assigned to a subchannel by an adjacent base station that is installed adjacent to a base station.
